# EUROPÄISCHE PATENTSCHRIFT

(11) **EP 2 859 033 B1**
(45) Veröffentlichungstag und Bekanntmachung des Hinweises auf die Patenterteilung: **08.06.2016**
(21) Anmeldenummer: 13721314.6
(22) Anmeldetag: 26.04.2013
(51) Int. Cl.: C08J 3/00, C08K 5/36, C08L 33/20, H01M 4/136

(54) **VERFAHREN ZUM HERSTELLEN EINES POLYACRYLNITRIL-SCHWEFEL-KOMPOSITWERKSTOFFS**
PROCEDURE FOR PREPARING A POLYACRYLNITRILE-SULFUR COMPOSITE
PROCÉDÉ POUR LA PRÉPARATION D'UN COMPOSITE DE POLYACRYLNITRILE-SOUFRE

(30) Priorität: 08.06.2012 DE 102012209635
(43) Veröffentlichungstag der Anmeldung: 15.04.2015
(73) Patentinhaber: Robert Bosch GmbH, 70442 Stuttgart (DE)
(72) Erfinder: FANOUS, Jean, 70374 Stuttgart (DE); TENZER, Martin, 72669 Unterensingen (DE)
(86) Internationale Anmeldenummer: PCT/EP2013/058762
(87) Internationale Veröffentlichungsnummer: WO 2013/182353

(56) Entgegenhaltungen:
- DE-A1-102010 018 731
- WANG ET.AL: "Sulfur Composite Cathode Materials for Rechargeable Lithium Batteries", ADVANCED FUNCTIONAL MATERIALS, Bd. 13, Nr. 6, 2003, Seiten 487-492, XP001162512, in der Anmeldung erwähnt

## Beschreibung

Die vorliegende Erfindung betrifft ein Verfahren zum Herstellen eines Polyacrylnitril-Schwefel-Kompositwerkstoffs, insbesondere als Aktivmaterial für eine Alkali-Schwefel-Batterie, insbesondere für eine Lithium-Schwefel-Batterie. Die vorliegende Erfindung betrifft ferner ein Verfahren zum Herstellen eines Aktivmaterials.

### Stand der Technik

Um Batterien mit einer großen Energiedichte herzustellen, wird derzeit an der Lithium-Schwefel-Batterietechnologie (kurz: Li/S) geforscht. Insofern die Kathode einer Lithium-Schwefel-Zelle vollständig aus elementarem Schwefel bestünde, könnte theoretisch ein Energieinhalt über 1.000Wh/kg erzielt werden. Elementarer Schwefel ist jedoch weder ionisch noch elektrisch leitfähig, so dass Additive zur Kathode hinzugegeben werden müssen, die den theoretischen Wert deutlich senken. Zudem wird elementarer Schwefel herkömmlicherweise bei der Entladung einer Lithium-Schwefel-Zelle zu löslichen Polysulfiden Sₓ²⁻ reduziert. Diese können in Bereiche, beispielsweise den Anodenbereich, diffundieren, in denen sie an der elektrochemischen Reaktion der nachfolgenden Lade/Entladezyklen nicht mehr teilnehmen können. Zudem können im Elektrolyten Polysulfide gelöst sein, welche nicht weiter reduziert werden können. In der Praxis ist daher derzeit die Schwefelausnutzung und damit die Energiedichte von Lithium-Schwefel-Zellen deutlich niedriger und wird derzeit zwischen 400Wh/kg und 600Wh/kg eingeschätzt.

Bezüglich Lithium-Schwefel-Zellen beschreiben Nazar et al. in Nature Materials, Vol. 8, June 2009, 500-506, dass Kohlenstoffröhrchen ein Zurückhalten von Polysulfiden im Kathodenraum begünstigen und gleichzeitig für eine ausreichende elektrische Leitfähigkeit sorgen. Dabei kann eine Verbesserung erzielt werden durch mit Polyethylenglykol oberflächenmodifizierten Kohlenstoffröhrchen, die eine Affinität für Polysulfide besitzen und diese somit noch besser in die Kathodenmatrix halten.

Wang et al. beschreiben in Advanced Materials, 14, 2002, Nr. 13-14, S. 963-965 und Advanced Functional Materials, 13, 2003, Nr. 6, S. 487-492 und Yu et al. beschreiben in Journal of Electroanalytical Chemistry, 573, 2004, 121-128 und Journal of Power Sources 146, 2005, 335-339 eine andere Technologie bei der Polyacrylnitril (kurz: PAN) mit einem Überschuss an elementarem Schwefel erhitzt wird, wobei der Schwefel zum einen unter Bildung von H₂S Polyacrylnitril zu einem Polymer mit konjugiertem π-System zyklisiert und zum anderen in der zyklisierten Matrix, insbesondere über Kohlenstoff-Schwefel-Bindungen, gebunden wird.

### Offenbarung der Erfindung

Gegenstand der vorliegenden Erfindung ist ein Verfahren zum Herstellen eines Polyacrylnitril-Schwefel-Kompositwerkstoffs, umfassend die Verfahrensschritte:
a) Vorlegen eines Matrixmaterials;
b) Gegebenenfalls Hinzufügen von Schwefel zu dem Matrixmaterial;
c) Hinzufügen von Polyacrylnitril zu dem Matrixmaterial zum Erzeugen einer Mischung aus Schwefel und Polyacrylnitril; und
d) Umsetzen von Schwefel und Polyacrylnitril.

Unter einem Polyacrylnitril-Schwefel-Kompositwerkstoff (SPAN) kann insbesondere ein Kompositwerkstoff verstanden werden, welcher durch eine Umsetzung von Polyacrylnitril (PAN) mit Schwefel (S) hergestellt ist.

Durch ein vorbeschriebenes Verfahren kann insbesondere ein Polyacrylnitril-Schwefel-Kompositwerkstoff mit einer definierten Struktur, einer guten elektrochemischen Zyklenstabilität sowie einer hohen Entladerate (C-Rate) erzeugt werden, welcher insbesondere zur Herstellung eines Aktivmaterials für eine Kathode in einem elektrochemischen Energiespeicher, wie insbesondere einer Lithium Schwefel-Batterie, geeignet sein kann.

In einem ersten Verfahrensschritt a) wird bei einem vorbeschriebenen Verfahren ein Matrixmaterial vorgelegt. Das Matrixmaterial kann dabei insbesondere die Aufgabe erfüllen, eine Matrix für eine in einem nachfolgenden Schritt durchgeführte Umsetzung von Schwefel und Polyacrylnitril zu bilden. Beispielsweise kann das Matrixmaterial fest oder flüssig sein. In Abhängigkeit der gewählten Temperatur kann das Matrixmaterial ferner als Schmelze ausgebildet sein.

Zu diesem vorgelegten Matrixmaterial wird in einem weiteren Verfahrensschritt b) gegebenenfalls Schwefel hinzugefügt für den Fall, dass das Matrixmaterial keinen Schwefel umfasst. Der Schwefel dient der späteren Umsetzung mit Polyacrylnitril. Zusätzlich zu dem Schwefel wird in einem weiteren Verfahrensschritt c) Polyacrylnitril zu dem Matrixmaterial hinzugefügt. Dabei kann der Schwefel oder das Polyacrylnitril grundsätzlich in einer frei wählbaren Reihenfolge dem Matrixmaterial hinzugefügt werden. Wichtig ist, dass eine Mischung aus Schwefel und Polyacrylnitril erzeugt wird. Dabei kann bereits bei dem Hinzufügen des Schwefels beziehungsweise des Polyacrylnitrils eine geeignete Temperatur gewählt werden, so dass beispielsweise der Schwefel als Schwefelschmelze vorliegen kann. Ferner kann das Matrixmaterial zu dem Polyacrylnitril in einem Verhältnis von kleiner als 1:1 (Gew.%) vorliegen. In einem weiteren Verfahrensschritt d) wird das Polyacrylnitril mit den Schwefel umgesetzt. Dabei entsteht ein Polyacrylnitril-Schwefel-Kompositwerkstoff.

Das Umsetzen des Schwefels mit dem Polyacrylnitril kann dabei insbesondere unter einem Überschuss von Schwefel erfolgen, und/oder bei erhöhter Temperatur, also bei einer gegenüber der Raumtemperatur, wie insbesondere 22°C, erhöhten Temperatur.

Die Umsetzung kann dabei in weniger als 12h, insbesondere weniger als 8h, beispielsweise 5h bis 7h, zum Beispiel in etwa 6h, durchgeführt werden. Insbesondere kann während der Umsetzung zuerst eine erste Temperatur, beispielsweise in einem Bereich von größer oder gleich 250°C bis kleiner oder gleich 450°C, und dann eine zweite Temperatur, welche höher als die erste Temperatur ist, beispielsweise in einem Bereich von größer oder gleich 400°C bis kleiner oder gleich 600°C, eingestellt werden. Dabei kann die Phase, innerhalb welcher die zweite Temperatur eingestellt wird, insbesondere länger sein als die Phase, in welcher die erste Temperatur eingestellt wird. Durch die erste Temperaturphase kann eine Zyklisierung des Poylacrylnitrils bewirkt werden. Während der zweiten Temperaturphase kann im Wesentlichen die Ausbildung von kovalenten Schwefel-Kohlenstoff-Bindungen erfolgen. Dadurch, dass hierbei eine niedrigere Temperatur eingestellt wird, können längere Polysulfidketten mit dem zyklisierten Polyacrylnitrilgerüst verknüpft werden.

Dadurch, dass in einem ersten Schritt zur Erzeugung des Komposit-Werkstoffs ein Matrixmaterial vorgelegt wird, und die eigentlichen Reaktanden, wie insbesondere das Polyacrylnitril, dem Matrixmaterial hinzugefügt werden, kann insbesondere eine Agglomeration der Polyacrylnitril-Partikel verhindert werden. Vielmehr fallen dadurch die gebildeten Komposit-Partikel als feines Komposit aus kleinen Partikeln aus. Beispielsweise für die Verwendung eines derartigen Kompositmaterials als Aktivmaterial in einer Kathode kann dadurch eine besonders homogene Verteilung der Kompositpartikel erreicht werden.

Der dadurch erzielbare Vorteil kann für den beispielhaften Fall einer Verwendung als Aktivmaterial in einer Lithium-Schwefel-Batterie, beispielsweise, insbesondere in den geringen Diffusionswegen für Lithium-Ionen im Komposit gesehen werden. Im Detail werden während des Ladevorgangs Lithium-Ionen durch den Elektrolyt hin zum Polyacrylnitril-Schwefel- Komposit-Partikel transportiert. Da die Reduktion des Komposits beziehungsweise des im Komposit enthaltenen Schwefels im Feststoff erfolgt, muss die lonenwanderung durch die Partikel erfolgen. Somit kann durch kleinere, feinere Partikel ein geringerer Durchmesser und somit eine geringere Diffusionslänge erreicht werden, was wiederum zu höheren Entlade- und Laderraten führen kann. Neben den niedrigeren Diffusionswegen kann auch die Überspannung niedriger sein.

Durch ein erfindungsgemäßes Verfahren ist somit ein Komposit-Werkstoff herstellbar, der insbesondere als Aktivmaterial in einer Lithium-Ionen-Batterie verbesserte Lade- beziehungsweise Entladeraten erzeugen kann.

Bei derartigen Kompositwerkstoffen existieren ferner Hinweise zu einer Schwefel-Kohlenstoffbindung, die die Polysulfide somit fest an die Polymermatrix binden. Folglich entsteht ein Schwefel-Polyacrylnitril-Komposit mit verschiedenen funktionellen Gruppen und chemischen Bindungen, die alle unterschiedliche Eigenschaften und Beiträge in Bezug auf elektrochemische Performance und Alterungsverhalten haben können.

Damit einhergehend kann durch das erfindungsgemäße Verfahren der Vorteil erreicht werden, dass der hergestellte Kompositwerkstoff insbesondere bei großen Stromstärken einen geringeren Kapazitätsabfall widerfährt, also eine besonders stabile Kapazität erhalten werden kann.

Dabei ist ein derartiger Kompositwerkstoff gemäß der vorliegenden Erfindung besonders einfach herstellbar, da insbesondere auf den Einsatz aufwändiger und mehrstufiger Synthesen verzichtet werden kann. Im Gegensatz dazu ist das erfindungsgemäße Verfahren besonders einfach und kostengünstig durchführbar, so dass auch der Kompositwerkstoff beziehungsweise das Aktivmaterial wie auch eine mit dem Kompositwerkstoff ausgestattete Elektrode beziehungsweise Batterie besonders kostengünstig herstellbar sein kann.

Dabei kann ein derartiger Polyacrylnitril-Schwefel-Kompositwerkstoff hergestellt werden, welcher besonders vorteilhaft als Kathodenmaterial für Alkali-Schwefel-Zellen, insbesondere Lithium-Schwefel-Zellen, eingesetzt werden kann, insbesondere um eine gute Langzeitstabilität beziehungsweise elektrochemische Zyklenstabilität und dabei eine besonders hohe elektrische Leitfähigkeit umfassend eine gute Ratenfähigkeit zu erzielen.

Im Rahmen einer Ausgestaltung kann in Verfahrensschritt c) eine Mischung aus Schwefel und Polyacrylnitril in einem Bereich von größer oder gleich 7,5:1 (Gew.-%) erzeugt werden. Insbesondere durch einen erhöhten Anteil an Schwefel können die Polyacrylnitril-Partikel zum Einen gut von einander getrennt werden, was zu besonders kleinen Kompositpartikel führen kann, da die Polyacrylnitril-Partikel nicht nur durch das Matrixmaterial, sondern gleichermaßen durch den Schwefel voneinander getrennt werden. Darüber hinaus kann ein besonders guter Kontakt jedes einzelnen Polyacrylnitril-Partikels mit dem Schwefel erreicht werden, was den Schwefelgehalt in den herzustellenden Kompositpartikeln ebenfalls erhöhen kann. Dadurch kann für den beispielhaften Fall der Verwendung eines derartigen Komposit-Werkstoffs als Aktivmaterial in einer Elektrode für eine Lithium-Ionen Batterie eine besonders hohe Kapazität erreicht werden. Somit wird in dieser Ausgestaltung in besonders vorteilhafter Weise nicht nur die Ratenfähigkeit besonders verbessert, sondern dabei gleichzeitig die Kapazität erhöht. Darüber hinaus kann in dieser Ausgestaltung der Effekt ausgeglichen werden, dass bei Erhöhung der Temperatur einer Reduzierung des Schwefelgehalts stattfinden kann. Somit kann insbesondere in dieser Ausgestaltung auch bei hohen Temperaturen unter Ausbildung eines Kompositwerkstoffs mit einer hohen Kapazität gearbeitet werden.

Beispielsweise kann das Gewichtsverhältnis von Schwefel zu, insbesondere zyklisiertem, Polyacrylnitril größer oder gleich 7.5:1 (Gew.-%), insbesondere kleiner oder gleich 20:1 (Gew.-%) betragen. Der bei der Herstellung überschüssig eingesetzte elementare Schwefel kann im Folgenden, beispielsweise durch Sublimation bei hohen Reaktionstemperaturen oder wie nachstehend erläutert, durch eine Soxhlet-Extraktion, entfernt werden. Durch einen Schwefelüberschuss kann insbesondere ein Kompositwerkstoff mit einer besonders vorteilhaften Leitfähigkeit erzeugt werden, was die Ratenfähigkeit weiter positiv beeinflusst.

Im Rahmen einer weiteren Ausgestaltung kann in Verfahrensschritt d) Polyacrylnitril mit Schwefel umgesetzt werden bei einer Temperatur in einem Bereich von größer oder gleich 250°, insbesondere in einem Bereich von größer oder gleich 450°C. Bei derartigen Temperaturen kann zum Einen eine besonders gute Reaktivität erzielbar sein und ferner der Schwefel als Schmelze vorliegen, was ein besonders reaktives Umsetzen des Schwefels mit dem Polyacrylnitril ermöglichen kann. Darüber hinaus kann insbesondere, wenn der Schwefel als Schmelze vorliegt, diese die Polyacrylnitril-Partikel insbesondere vollständig umschließen und somit bewirken, dass besonders kleine Polyacrylnitril-Schwefel-Partikel gebildet werden, diese möglichst gut mit dem Schwefel reagieren und somit ein hoher Schwefelgehalt erhalten wird.

Im Rahmen einer weiteren Ausgestaltung kann das Matrixmaterial ausgewählt werden aus der Gruppe bestehend aus Schwefel, Siliciumverbindungen, wie etwa Siliciumdioxid, und/oder Kohlenstoffmodifikationen. Insbesondere bei der Verwendung von Schwefel als Matrixmaterial kann jeder Polyacrylnitril-Partikel von Schwefel umgeben sein und somit ein Polyacrylnitril-Schwefel-Komposit-Werkstoff gebildet werden, der einen besonders hohen Schwefelanteil aufweist. Dadurch kann die Kapazität, beispielsweise bei der Verwendung als Aktivmaterial in einer Elektrode, besonders hoch sein. Darüber hinaus weist Schwefel einen niedrigen Schmelzpunkt auf, so dass schon bei vergleichsweise geringen Temperaturen Schwefel als Schmelze vorliegen kann, wodurch die Polyacrylnitril-Partikel besonders vorteilhaft getrennt und eine Agglomeration verhindert werden kann. Weiterhin bietet sich der Vorteil an, dass in dieser Ausgestaltung eine Umsetzung von Schwefel mit Polyacrylnitril im Wesentlichen lediglich unter der Verwendung von nur Schwefel und Polyacrylnitril durchgeführt werden kann, wodurch auf den Zusatz weiterer Stoffe verzichtet werden kann. Dadurch ist das Verfahren in dieser Ausgestaltung besonders einfach und kostengünstig möglich. Bezüglich der Siliciumverbindungen und der Kohlenstoffmodifikationen kann ferner eine inerte Matrix vorliegen, in welcher der Schwefel mit dem Polyacrylnitril besonders definiert umsetzbar sein kann.

Im Rahmen einer weiteren Ausgestaltung kann der Kompositwerkstoff hergestellt werden in Partikeln einer Größe in einem Bereich von größer oder gleich 100nm bis kleiner oder gleich 50µm. Insbesondere derartige Partikel weisen eine besonders geringe Größe auf, so dass die Diffusionswege, beispielsweise für Lithium-Ionen, besonders gering sein können. Dadurch bietet sich insbesondere bei der Erzeugung derartiger Partikel ein besonders verbessertes Ratenverhalten.

Im Rahmen einer weiteren Ausgestaltung kann das Verfahren den weiteren Verfahrensschritt umfassen:
e) Aufreinigen des erzeugten Kompositwerkstoffs.

Durch ein Aufreinigen kann der Polyacrylnitril-Schwefel-Kompositwerkstoff insbesondere von überschüssigem Matrixmaterial und/oder Schwefel getrennt werden und kann somit eine besonders definierte Struktur ohne die Gefahr weiterer Veränderungen einnehmen. Darüber hinaus kann ein Kompositwerkstoff nach einem Aufreinigen unmittelbar als Aktivmaterial dienen. Dabei kann der Kompositwerkstoff nach dem Aufreinigen insbesondere getrocknet werden.

Im Rahmen einer weiteren Ausgestaltung kann das Aufreinigen gemäß Verfahrensschritt e) durch eine Soxhlet-Extraktion durchgeführt werden, insbesondere wobei die Soxhlet-Extraktion durchgeführt wird unter Verwendung von einem organischen Lösungsmittel. Insbesondere kann die Soxhlet-Extraktion mit einem apolaren Lösungsmittel oder Lösungsmittelgemisch, beispielsweise Toluol, durchgeführt werden und der überschüssige Schwefel entfernt werden. Ein Soxhlet-Extraktion ist eine besonders einfache und kostengünstige Methode und dabei für den hergestellten Kompositwerkstoff besonders schonend, so dass während des Aufreinigens keine Strukturveränderung der Partikel stattfinden kann. Dadurch kann die Ratenfähigkeit besonders stabil bleiben.

Im Rahmen einer weiteren Ausgestaltung kann zumindest der Verfahrensschritt d) unter Inertgasatmosphäre durchgeführt werden. Überraschenderweise wurde gefunden, dass eine Inertgasatmosphäre dazu beitragen kann, eine besonders homogene und definierte Struktur des Polyacrylnitril-Schwefel-Kompositwerkstoffs zu erhalten. Unter einer Inertgasatmosphäre kann dabei insbesondere eine Atmosphäre eines bei den bei dem Verfahrensschritt d) herrschenden Bedingungen unreaktiven Gases verstanden werden. Beispielsweise kann eine Inertgasatmosphäre durch Argon oder Stickstoff gebildet werden.

Im Rahmen einer weiteren Ausgestaltung kann in dem Verfahrensschritt c) ein zyklisiertes Polyacrylnitril zu dem Matrixmaterial hinzugefügt wird, wobei das zyklisierte Polyacrylnitril erhalten wird durch Umsetzen von Polyacrylnitril zu zyklisiertem Polyacrylnitril.

Im einem ersten Verfahrensschritt kann dabei beispielsweise zunächst eine elektrisch leitfähige Basis in Form des elektrisch leitenden, zyklisierten Polyacrylnitrils (cPAN) gebildet werden. In einem weiteren Verfahrensschritt kann dann die Umsetzung mit dem elektrochemisch aktiven Schwefel erfolgen, insbesondere wobei dieser kovalent an das elektrisch leitende Gerüst aus zyklisiertem Polyacrylnitril unter Ausbildung eines Polyacrylnitril-Schwefel-Kompositwerkstoffs (ScPAN) gebunden wird. Durch eine Separation in zwei Teilreaktion können die Reaktionsbedingungen vorteilhafterweise auf die jeweilige Reaktion optimiert werden. Der erste Verfahrensschritt ähnelt dabei einer aus der Carbonfaserherstellung bekannten Dehydrierungsreaktion, wobei der zweite Verfahrensschritt einer Reaktion aus einem weiteren, vollkommen anderen technischen Gebiet, nämlich, der Vulkanisationsreaktion von Kautschuk ähnelt.

Dabei kann die Zyklisierung insbesondere in einer sauerstoffhaltigen Atmosphäre, beispielsweise einer Luft- oder Sauerstoffatmosphäre, erfolgen. Dabei kann die Zyklisierung beispielsweise bei einer Temperatur in einem Bereich von größer oder gleich 150°C bis kleiner oder gleich 500°C, insbesondere von größer oder gleich 150°C bis kleiner oder gleich 330°C oder kleiner oder gleich 300°C oder kleiner oder gleich 280°C, beispielsweise von größer oder gleich 230°C bis kleiner oder gleich 270°C, erfolgen. Vorteilhafterweise kann die Reaktionszeit des ersten Verfahrensschritts weniger als 3h, insbesondere weniger als 2h, beispielsweise weniger als 1 h betragen. Insbesondere kann der erste Verfahrensschritt in Gegenwart eines Zyklisierungskatalysators erfolgen. Als Zyklisierungskatalysatoren können beispielsweise aus der Carbonfaserherstellung bekannt Katalysatoren eingesetzt werden. Durch den Zusatz eines Zyklisierungskatalysators kann vorteilhafterweise die Reaktionstemperatur und/oder die Reaktionszeit der Umsetzung des Polyacrylnitrils mit dem Schwefel verringert werden.

Die Schwefelatome können in dem Polyacrylnitril-Schwefel-Kompositwerkstoff sowohl direkt durch kovalente Schwefel-Kohlenstoffbindungen als auch indirekt durch eine oder mehrere kovalente Schwefel-Schwefelbindungen und eine oder mehrere Schwefel-Kohlenstoffbindungen mit dem zyklisierten Polyacrylnitrilgerüst verbunden sein.

Alternativ oder zusätzlich dazu kann ein Teil der Schwefelatome des Polyacrylnitril-Schwefel-Kompositwerkstoffs, beispielsweise in Form von Polysulfidketten, beidseitig intramolekular mit einem zyklisierten Polyacrylnitrilstrang, insbesondere unter Ausbildung eines an den zyklisierten Polyacrylnitrilstrang annelierten S-Heterozyklus, und/oder intermolekular mit zwei zyklisierten Polyacrylnitrilsträngen, insbesondere unter Ausbildung einer Brücke, insbesondere Polysulfidbrücke, zwischen den zyklisierten Polyacrylnitrilsträngen, kovalent verbunden sein.

Im Rahmen einer weiteren Ausgestaltung kann Polyacrylnitril mit Schwefel in Verfahrensschritt d) in Gegenwart eines Katalysators umgesetzt werden. Durch den Zusatz eines Katalysators kann vorteilhafterweise die Reaktionstemperatur sowie die Reaktionszeit verringert werden. Durch eine Erniedrigung der Reaktionstemperatur kann zudem die Kettenlänge von an das zyklisierte Polyacrylnitril kovalent gebundenen Polysulfiden erhöht werden. Dies liegt darin begründet, dass elementarer Schwefel bei Raumtemperatur in Form von S8-Ringen vorliegt. Bei Temperaturen oberhalb der Raumtemperatur liegt Schwefel in Form von Sx-Ketten mittlerer Kettenlänge, beispielsweise von 6 bis 26 Schwefelatomen, oder großer Kettenlänge, beispielsweise von 103 bis 106 Schwefelatomen, vor. Oberhalb von 187°C beginnt ein thermischer Crackprozess und die Kettenlänge sinkt wieder. Ab 444,6°C (Siedepunkt) liegt gasförmiger Schwefel mit einer Kettenlänge von 1-8 Atomen vor. Die Verwendung eines Vulkanisationskatalysators hat dabei den Vorteil, dass bei einer niedrigeren Temperatur längere inter- und/oder intramolekulare, kovalent an, insbesondere zyklisiertes, Polyacrylnitril gebundene Schwefelbrücken in den Polyacrylnitril-Schwefel-Kompositwerkstoff eingeführt werden können. So kann wiederum vorteilhafterweise ein höherer Schwefelgehalt des Polyacrylnitril-Schwefel-Kompositwerkstoffs und damit eine höhere Kapazität und Energiedichte der mit dem Kathodenmaterial auszustattenden Alkali-Schwefel-Zelle, insbesondere Lithium-Schwefel-Zelle, erzielt werden. Dies kann zwar zu einer Verringerung der Zyklenstabilität führen, was jedoch beispielsweise durch die Wahl eines geeigneten Elektrolyten ausgeglichen werden kann.

Geeignete Katalysatoren sind aus dem technischen Gebiet der Kautschukvulkanisation bekannt. Vorzugsweise wird die Umsetzung daher hierbei zumindest zeitweilig in Gegenwart eines Vulkanisationskatalysators beziehungsweise Vulkanisationsbeschleunigers durchgeführt. Insbesondere kann der Vulkanisationskatalysator beziehungsweise Vulkanisationsbeschleuniger mindestens einen sulfidischen Radikalstarter umfassen oder daraus bestehen. Insbesondere kann der sulfidische Radikalstarter ausgewählt sein aus der Gruppe bestehend aus sulfidischen Metallkomplexen, beispielsweise erhältlich durch Reaktion von Zinkoxid (ZnO) und Tetramethylthiuramidisulfid oder N,N-Dimethylthiocarbamat, Sulfenamiden, zum Beispiel 2-Mercaptobenzothiazoylaminderivaten, und Kombinationen davon. Beispielsweise kann die Reaktionsmischung größer oder gleich 3Gew.-% bis kleiner oder gleich 5Gew.-% Zinkoxid und gegebenenfalls größer oder gleich 0,5Gew.-% bis kleiner oder gleich 1Gew.-% Tetramethylthiuramidisulfid umfassen. Um die Reaktionsgeschwindigkeit zu verringern oder eine Reaktionsphase mit einer, beispielsweise durch den Katalysator, erhöhten Reaktionsgeschwindigkeit zu beenden kann, die Umsetzung zumindest zeitweilig in Gegenwart eines Vulkanisationsinhibitors durchgeführt werden. Hierfür geeignete Vulkanisationsinhibitoren sind ebenfalls aus dem technischen Gebiet der Kautschukvulkanisation bekannt. Beispielsweise kann N-(Cyclohexylthio)phthalamid als Vulkanisationsinhibitor eingesetzt werden. Durch den Einsatz und die Dauer des Einsatzes des Katalysators, insbesondere des Vulkanisationskatalysators beziehungsweise Vulkanisationsbeschleunigers und/oder Vulkanisationsinhibitors, können die Eigenschaften des Polyacrylnitril-Schwefel-Kompositwerkstoff gezielt eingestellt werden. Gegebenenfalls werden der Katalysator und gegebenenfalls der Inhibitor in einem Entfernungsschritt teilweise oder vollständig entfernt.

Hinsichtlich weiterer Merkmale und Vorteile des erfindungsgemäßen Verfahrens zum Herstellen eines Polyacrylnitril-Schwefel-Kompositwerkstoffs wird hiermit explizit auf die Erläuterungen im Zusammenhang mit dem erfindungsgemäßen Verfahren zum Herstellen eines Aktivmaterials für eine Elektrode sowie der Verwendung verwiesen.

Gegenstand der Erfindung ist ferner ein Verfahren zum Herstellen eines Aktivmaterials für eine Elektrode, insbesondere für eine Kathode einer Lithium-Schwefel-Batterie, umfassend wie vorstehend beschrieben ausgestaltetes Verfahren zum Herstellen eines Polyacrylnitril-Schwefel-Kompositwerkstoffs. Hier kann insbesondere ausgenutzt werden, dass ein wie vorstehend ausgeführt hergestellter Polyacrylnitril-Schwefel-Kompositwerkstoff insbesondere als Aktivmaterial einer Elektrode, insbesondere einer Kathode, für eine Lithium-Schwefel-Batterie vorteilhafte Eigenschaften, wie insbesondere eine hohe Ratenfähigkeit, aufweisen kann. Dadurch kann etwa ein hiermit ausgestatteter Energiespeicher ein besonders bevorzugtes Lade- und/oder Entladeverhalten aufweisen.

Im Rahmen einer Ausgestaltung kann das Verfahren weiterhin den Verfahrensschritt umfassen:
f) Zumischen mindestens eines elektrisch leitenden Additivs zu dem Polyacrylnitril-Schwefel-Kompositwerkstoff, insbesondere ausgewählt aus der Gruppe bestehend aus Ruß, Graphit, Kohlenstofffasern, Kohlenstoffnanoröhrchen und Mischungen davon.

Dabei kann exemplarisch größer oder gleich 0,1Gew.-% bis kleiner oder gleich 30Gew.-%, beispielsweise größer oder gleich 5Gew.-% bis kleiner oder gleich 20Gew.-%, an elektrisch leitenden Additiven zugemischt werden. Durch das Zumischen eines elektrisch leitenden Additivs kann die Leitfähigkeit und damit die Ratenfähigkeit der erhaltenen Mischung weiter verbessert werden, was einen Einsatz als Aktivmaterial in einer Elektrode besonders vorteilhaft gestaltet.

Im Rahmen einer weiteren Ausgestaltung kann das Verfahren weiterhin den Verfahrensschritt umfassen:
d) Zumischen mindestens eines Bindemittels, insbesondere von Polyvinylidenfluorid und/oder Polytetrafluorethylen, zu dem Polyacrylnitril-Kompositwerkstoff.

Dabei können größer oder gleich 0,1Gew.-% bis kleiner oder gleich 30Gew.-%, beispielsweise größer oder gleich 5Gew.-% bis kleiner oder gleich 20Gew.-%, an Bindemitteln zugemischt werden. Ferner kann das Bindemittel oder können die Bindemittel unter Zusatz von N-Methyl-2-pyrrolidon als Lösungsmittel zugemischt werden. Durch das Zusetzen von Bindemitteln kann insbesondere die Stabilität des Kathodenmaterials verbessert werden, was einen Einsatz in elektrochemischen Energiespeichern verbessern kann.

Im Rahmen einer weiteren Ausgestaltung kann
- in Verfahrensschritt f) und/oder in Verfahrensschritt g) größer oder gleich 60Gew.-% bis kleiner oder gleich 90Gew.-%, insbesondere größer oder gleich 65Gew.-% bis kleiner oder gleich 95Gew.-%, beispielsweise 70Gew.-% an Polyacrylnitril-Schwefel-Kompositwerkstoff verwendet werden, und/oder
- in Verfahrensschritt f) größer oder gleich 0,1Gew.-% bis kleiner oder gleich 30Gew.-%, beispielsweise größer oder gleich 5Gew.-% bis kleiner oder gleich 20Gew.-%, an elektrisch leitenden Additiven zugemischt werden, und/oder
- in Verfahrensschritt g) größer oder gleich 0,1Gew.-% bis kleiner oder gleich 30Gew.-%, beispielsweise größer oder gleich 5Gew.-% bis kleiner oder gleich 20Gew.-%, an Bindemitteln zugemischt werden.

Dabei kann die Summe der Gewichtsprozentwerte von Polyacrylnitril-Schwefel-Kompositwerkstoff, elektrisch leitenden Additiven und Bindemitteln je nach Einsatz insbesondere insgesamt 100 Gewichtsprozent ergeben.

Hinsichtlich weiterer Merkmale und Vorteile des erfindungsgemäßen Verfahrens zum Herstellen eines Aktivmaterials für eine Elektrode wird hiermit explizit auf die Erläuterungen im Zusammenhang mit dem erfindungsgemäßen Verfahren zum Herstellen eines Polyacrylnitril-Schwefel-Kompositwerkstoffs sowie der Verwendung verwiesen.

Gegenstand der Erfindung ist ferner eine Verwendung eines Polyacrylnitril-Schwefel-Kompositwerkstoffs, hergestellt wie vorstehend erläutert, als Aktivmaterial in einer Elektrode, insbesondere in einer Kathode einer Lithium-Ionen-Batterie.

Hinsichtlich besonderer Merkmale und Vorteile der erfindungsgemäßen Verwendung wird hiermit explizit auf die Erläuterungen im Zusammenhang mit dem erfindungsgemäßen Verfahren zum Herstellen eines Polyacrylnitril-Schwefel-Kompositwerkstoffs sowie dem Verfahren zum Herstellen eines Aktivmaterials für eine Elektrode verwiesen.

Ein wie vorstehend ausgestaltetes Aktivmaterial kann im Folgenden besonders vorteilhaft der Herstellung eines Energiespeichers dienen.

Zur Ausgestaltung eines derartigen Energiespeichers kann das Aktivmaterial umfassend einen wie vorstehend beschrieben hergestellten Polyacrylnitril-Schwefel-Kompositwerkstoff , insbesondere zur Ausbildung eines Schlickers zur Herstellung einer Kathode, weiterhin mit mindestens einem Lösungsmittel versetzt werden, beispielsweise N-Methyl-2-pyrrolidon. Ein derartiger Schlicker kann, beispielsweise durch Rakeln, auf ein Trägermaterial, zum Beispiel eine Aluminiumplatte oder -folie, aufgebracht werden. Die Lösungsmittel werden vorzugsweise nach dem Aufbringen des Aktimaterials und vor dem Zusammenbau der Lithium-Schwefel-Zelle, vorzugsweise vollständig, insbesondere durch ein Trocknungsverfahren, wieder entfernt.

Die Aktivmaterial-Trägermaterial-Anordnung kann anschließend, beispielsweise durch Stanzen oder Schneiden, zu mehreren Aktivmaterial-Trägermaterial-Einheiten zerteilt werden.

Die Aktivmaterial-Trägermaterial-Anordnung beziehungsweise -einheiten können mit einer Lithiummetallanode, beispielsweise in Form einer Platte oder Folie aus metallischem Lithium, zu einer Lithium-Schwefel-Zelle verbaut werden.

Dabei kann insbesondere ein Elektrolyt zugesetzt werden. Der Elektrolyt kann insbesondere aus mindestens einem Elektrolytlösungsmittel und mindestens einem Leitsalz ausgebildet sein. Grundsätzlich kann das Elektrolytlösungsmittel ausgewählt sein aus der Gruppe bestehend aus Kohlensäureestern, insbesondere zyklischen oder azyklischen Carbonaten, Lactonen, Ethern, insbesondere zyklischen oder acyclischen Ethern, und Kombinationen davon. Zum Beispiel kann das Elektrolytlösungsmittel Diethylcarbonat (DEC), Dimethylcarbonat (DMC), Propylencarbonat (PC), Ethylencarbonat (EC), 1,3-Dioxolan (DOL), 1,2-Dimethoxyethan (DME) oder eine Kombination davon umfassen oder daraus bestehen. Das Leitsalz kann beispielsweise ausgewählt. sein aus der Gruppe bestehend aus Lithiumhexafluorophosphat (LiPF₆), Lithiumbis(trifluormethylsulphonyl)imid (LiTFSI), Lithiumtetrafluoroborat (LiBF₄), Lithiumtrifluormethansulfonat (LiCF₃SO₃), Lithiumchlorat (LiClO₄), Lithiumbis(oxalato)borat (LiBOB), Lithiumfluorid (LiF), Lithiumnitrat (LiNO₃), Lithiumhexafluoroarsenat (LiAsF₆) und Kombinationen davon.

Dabei haben sich bezüglich der vorgenannten Aktivmaterialien, insbesondere um Reaktionen zwischen dem elementaren Schwefel und dem Elektrolyt zu vermeiden, als besonders vorteilhaft erwiesen als Lösungsmittel zyklische Ether, acyclische Ether und Kombinationen davon, und/oder als Leitsalz Lithiumbis(trifluormethylsulphonyl)imid (LiTFSI).

Ein derartiger Energiespeicher kann insbesondere sein ein mobiler oder stationärer Energiespeicher. Zum Beispiel kann es sich bei dem Energiespeicher um einen Energiespeicher für ein Fahrzeug, beispielsweise ein Elektro- oder Hybridfahrzeug, oder ein Elektrowerkzeug oder -gerät, beispielsweise einen Schraubendreher oder ein Gartengerät, oder ein elektronisches Gerät, beispielsweise einen tragbaren Computer und/oder eine Telekommunikationsgerät, wie ein Mobiltelefon, PDA, oder ein Hochenergiespeichersystem für ein Haus oder eine Anlage handeln. Da die erfindungsgemäßen Alkali-Schwefel-Zellen oder -Batterien eine sehr hohe Energiedichte aufweisen, sind diese besonders für Fahrzeuge und stationäre Speichersysteme, wie Hochenergiespeichersysteme für Häuser oder Anlagen, geeignet.

### Beispiele

Weitere Vorteile und vorteilhafte Ausgestaltungen der erfindungsgemäßen Gegenstände werden durch das Beispiel veranschaulicht und in der nachfolgenden Beschreibung erläutert. Dabei ist zu beachten, dass das Beispiel nur beschreibenden Charakter hat und nicht dazu gedacht ist, die Erfindung in irgendeiner Form einzuschränken.

Im Folgenden wird gezeigt ein Beispiel der Herstellung eines erfindungsgemäßen Polyacrylnitril-Schwefel-Kompositwerkstoffs beziehungsweise eines darauf basierenden Aktivmaterials beziehungsweise einer erfindungsgemäßen Elektrode für eine Lithium-Schwefel-Batterie. Derartige Energiespeicher sind insbesondere von Vorteil für alle Anwendungen, die mit einer Batterie mit hoher Leistungsfähigkeit ausgestattet werden. Dies können elektrisch angetriebene Fahrzeuge, wie Hybrid-Fahrzeuge, Elektrowerkzeuge, Notebooks, Mobiltelefone oder Gartengeräte, aber auch stationäre Hoch-Energiespeichersystemen für Häuser oder Anlagen sein.

In einem ersten Schritt wird ein Matrixmaterial vorgelegt, was beispielsweise Schwefel umfassen kann. In diesem Fall wird eine Schwefelschmelze (beispielsweise 100g) vorgelegt, etwa bei einer Temperatur von 250°C. Anschließend wird entweder reines Polyacrylnitril oder eine Mischung aus Polyacrylnitril und Schwefel unter Rühren sukzessive zugegeben (beispielsweise 1g PAN). Anschließend kann die Mischung noch einige Zeit, wie beispielsweise 2 Stunden, bei 250°C gerührt werden, dann kann auf eine höhere Temperatur, wie beispielsweise 330°C, erhitzt werden. Im Anschluss wird die Reaktion für weitere Stunden, insbesondere 4 Stunden, fortgeführt.

Nach Abkühlen der Schmelze kann der hergestellte Kompositwerkstoff beispielsweise mit heißem Toluol behandelt werden, um einen Großteil des Schwefels zu entfernen. Anschließend kann die endgültige Reinigung des Komposit beispielsweise in einer Soxhlet-Extraktion durchgeführt werden.

In einem nächsten Schritt wird das schwefelhaltige, zyklisierte Polyacrylnitril, also das fertiggestellte Komposit, zu einer Kathodenslurry zur Ausbildung eines Kathoden-Aktivmaterials verarbeitet. Dafür werden das Aktivmaterial (SPAN), Ruß (etwa das unter dem Handelsnamen Super P Li erhältliche Ruß) als elektrisch leitendes Additiv und Polyvinylidenfluorid (PVDF) als Binder beziehungsweise Bindemittel in einem Verhältnis von 70:15:15 (in Gew.-%) in N-Methyl-2-pyrrolidon (NMP) als Lösungsmittel gemischt und homogenisiert. Die Slurry wird auf eine Aluminiumfolie gerakelt und getrocknet. Nach vollständiger Trocknung wird eine Kathode ausgestanzt und in einer Testzelle gegen eine Lithium-Metallanode verbaut. Als Elektrolyt kommen verschiedene zyklische und lineare Carbonate (DEC, DMC, EC) sowie Mischungen daraus mit einem lithiumhaltigen Leitsalz (beispielsweise LiPF₆, Lithium-Bis(Trifluoromethansulfonyl)Imid (LiTFSI) zum Einsatz.

## Patentansprüche

1. Verfahren zum Herstellen eines Polyacrylnitril-Schwefel-Kompositwerkstoffs, umfassend die Verfahrensschritte:
a) Vorlegen eines Matrixmaterials;
b) Gegebenenfalls Hinzufügen von Schwefel zu dem Matrixmaterial;
c) Hinzufügen von Polyacrylnitril zu dem Matrixmaterial zum Erzeugen einer Mischung aus Schwefel und Polyacrylnitril; und
d) Umsetzen von Schwefel und Polyacrylnitril.

2. Verfahren nach Anspruch 1, wobei in Verfahrensschritt c) eine Mischung aus Schwefel und Polyacrylnitril in einem Bereich von größer oder gleich 7,5:1 erzeugt wird.

3. Verfahren nach Anspruch 1 oder 2, wobei in Verfahrensschritt d) Polyacrylnitril mit Schwefel umgesetzt wird bei einer Temperatur in einem Bereich von größer oder gleich 250°, insbesondere in einem Bereich von größer oder gleich 450°C.

4. Verfahren nach einem der Ansprüche 1 bis 3, wobei das Matrixmaterial ausgewählt wird aus der Gruppe bestehend aus Schwefel, Siliciumverbindungen, wie etwa Siliciumdioxid, und/oder Kohlenstoffmodifikationen.

5. Verfahren nach einem der Ansprüche 1 bis 4, wobei der Kompositwerkstoff hergestellt wird in Partikeln einer Größe in einem Bereich von größer oder gleich 100nm bis kleiner oder gleich 50µm.

6. Verfahren nach einem der Ansprüche 1 bis 5, wobei das Verfahren den weiteren Verfahrensschritt umfasst:
e) Aufreinigen des erzeugten Kompositwerkstoffs.

7. Verfahren nach Anspruch 6, wobei das Aufreinigen gemäß Verfahrensschritt e) durch eine Soxhlet-Extraktion durchgeführt wird, insbesondere wobei die Soxhlet-Extraktion durchgeführt wird unter Verwendung von einem organischen Lösungsmittel.

8. Verfahren nach einem der Ansprüche 1 bis 7, wobei zumindest der Verfahrensschritt d) unter Inertgasatmosphäre durchgeführt wird.

9. Verfahren nach einem der Ansprüche 1 bis 8, wobei in dem Verfahrensschritt c) ein zyklisiertes Polyacrylnitril zu dem Matrixmaterial hinzugefügt wird, wobei das zyklisierte Polyacrylnitril erhalten wird durch Umsetzen von Polyacrylnitril zu zyklisiertem Polyacrylnitril.

10. Verfahren nach einem der Ansprüche 1 bis 9, wobei in Verfahrensschritt d) Polyacrylnitril mit Schwefel in Gegenwart eines Katalysators umgesetzt wird.

11. Verfahren zum Herstellen eines Aktivmaterials für eine Elektrode, insbesondere für eine Kathode einer Lithium-Schwefel-Batterie, umfassend ein Verfahren nach einem der Ansprüche 1 bis 10.

12. Verfahren nach Anspruch 11, wobei das Verfahren weiterhin den Verfahrensschritt umfasst:
f): Zumischen mindestens eines elektrisch leitenden Additivs zu dem Polyacrylnitril-Schwefel-Kompositwerkstoff, insbesondere ausgewählt aus der Gruppe bestehend aus Ruß, Graphit, Kohlenstofffasern, Kohlenstoffnanoröhrchen und Mischungen davon.

13. Verfahren nach einem der Ansprüche 11 oder 12, wobei das Verfahren weiterhin den Verfahrensschritt umfasst:
g) Zumischen mindestens eines Bindemittels, insbesondere von Polyvinylidenfluorid und/oder Polytetrafluorethylen, zu dem Polyacrylnitril-Schwefel-Kompositwerkstoff.

14. Verfahren nach einem der Ansprüche 11 bis 13, wobei.
- in Verfahrensschritt f) und/oder in Verfahrensschritt g) größer oder gleich 60Gew.-% bis kleiner oder gleich 90Gew.-%, insbesondere größer oder gleich 65Gew.-% bis kleiner oder gleich 75Gew.-%, beispielsweise 70Gew.-% an Polyacrylnitril-Schwefel-Kompositwerkstoff verwendet werden, und/oder
- in Verfahrensschritt f) größer oder gleich 0,1Gew.-% bis kleiner oder gleich 30Gew.-%, beispielsweise größer oder gleich 5Gew.-% bis kleiner oder gleich 20Gew.-%, an elektrisch leitenden Additiven zugemischt werden, und/oder
- in Verfahrensschritt g) größer oder gleich 0,1Gew.-% bis kleiner oder gleich 30Gew.-%, beispielsweise größer oder gleich 5Gew.-% bis kleiner oder gleich 20Gew.-%, an Bindemitteln zugemischt werden.

15. Verwendung eines Polyacrylnitril-Schwefel-Kompositwerkstoffs, hergestellt nach einem der Ansprüche 1 bis 10 als Aktivmaterial in einer Elektrode, insbesondere in einer Kathode einer Lithium-Ionen-Batterie.

## Claims

1. Process for producing a polyacrylonitrile-sulphur composite, which comprises the process steps:
a) provision of a matrix material;
b) optionally addition of sulphur to the matrix material;
c) addition of polyacrylonitrile to the matrix material to produce a mixture of sulphur and polyacrylonitrile; and
d) reaction of sulphur and polyacrylonitrile.

2. Process according to Claim 1, wherein a mixture of sulphur and polyacrylonitrile in the range of greater than or equal to 7.5:1 is produced in process step c).

3. Process according to Claim 1 or 2, wherein polyacrylonitrile is reacted with sulphur at a temperature in the range of greater than or equal to 250°C, in particular in the range of greater than or equal to 450°C, in process step d).

4. Process according to any of Claims 1 to 3, wherein the matrix material is selected from the group consisting of sulphur, silicon compounds such as silicon dioxide and carbon modifications.

5. Process according to any of Claims 1 to 4, wherein the composite is produced in particles having a size in the range from ≥ 100 nm to ≤ 50 µm.

6. Process according to any of Claims 1 to 5, wherein the process comprises the further process step: e) purification of the composite produced.

7. Process according to Claim 6, wherein the purification in process step e) is carried out by Soxhlet extraction, in particular with the Soxhlet extraction being carried out using an organic solvent.

8. Process according to any of Claims 1 to 7, wherein at least process step d) is carried out under an inert gas atmosphere.

9. Process according to any of Claims 1 to 8, wherein a cyclized polyacrylonitrile is added to the matrix material in process step c), with the cyclized polyacrylonitrile being obtained by conversion of polyacrylonitrile into cyclized polyacrylonitrile.

10. Process according to any of Claims 1 to 9, wherein polyacrylonitrile is reacted with sulphur in the presence of a catalyst in process step d).

11. Process for producing an active material for an electrode, in particular for a cathode of a lithium-sulphur battery, which comprises a process according to any of Claims 1 to 10.

12. Process according to Claim 11, wherein the process further comprises the process step:
f) mixing of at least one electrically conductive additive into the polyacrylonitrile-sulphur composite, in particular an additive selected from the group consisting of carbon black, graphite, carbon fibres, carbon nanotubes and mixtures thereof.

13. Process according to either Claim 11 or 12, wherein the process further comprises the process step:
g) mixing of at least one binder, in particular polyvinylidene fluoride and/or polytetrafluoroethylene, into the polyacrylonitrile-sulphur composite.

14. Process according to any of Claims 11 to 13, wherein
- from ≥ 60o by weight to ≤ 90% by weight, in particular from ≥ 65% by weight to ≤ 75% by weight, for example 70% by weight, of polyacrylonitrile-sulphur composite is used in process step f) and/or in process step g), and/or
- from ≥ 0.1% by weight to ≤ 30% by weight, for example from ≥ 5% by weight to ≤ 20% by weight, of electrically conductive additives are mixed in in process step f), and/or
- from ≥ 0.1% by weight to ≤ 30% by weight, for example from ≥ 5% by weight to ≤ 20% by weight, of binders are mixed in in process step g).

15. Use of a polyacrylonitrile-sulphur composite produced according to any of Claims 1 to 10 as active material in an electrode, in particular in a cathode of a lithium ion battery.

## Revendications

1. Procédé pour la préparation d'un matériau composite à base de polyacrylonitrile-soufre, comprenant les étapes de procédé consistant à :
a) disposer au préalable un matériau de matrice ;
b) le cas échéant, ajouter du soufre au matériau de matrice ;
c) ajouter du polyacrylonitrile au matériau de matrice pour obtenir un mélange de soufre et de polyacrylonitrile ; et
d) transformer le soufre et le polyacrylonitrile.

2. Procédé selon la revendication 1, un mélange de soufre et de polyacrylonitrile dans une plage supérieure ou égale à 7,5:1 étant obtenu dans l'étape de procédé c).

3. Procédé selon la revendication 1 ou 2, du polyacrylonitrile étant transformé avec du soufre à une température dans une plage supérieure ou égale à 250°C, en particulier dans une plage supérieure ou égale à 450°C dans l'étape de procédé d).

4. Procédé selon l'une quelconque des revendications 1 à 3, le matériau de matrice étant choisi dans le groupe constitué par le soufre, les composés siliciés, tels que par exemple le dioxyde de silicium, et/ou des modifications de carbone.

5. Procédé selon l'une quelconque des revendications 1 à 4, le matériau composite étant préparé sous forme de particules d'une grosseur dans une plage supérieure ou égale à 100 nm jusqu'à inférieure ou égale à 50 µm.

6. Procédé selon l'une quelconque des revendications 1 à 5, le procédé comprenant en outre l'étape de procédé consistant à
e) purifier le matériau composite obtenu.

7. Procédé selon la revendication 6, la purification selon l'étape de procédé e) étant réalisée par une extraction Soxhlet, l'extraction Soxhlet étant en particulier réalisée avec utilisation d'un solvant organique.

8. Procédé selon l'une quelconque des revendications 1 à 7, au moins l'étape de procédé d) étant réalisée sous atmosphère de gaz inerte.

9. Procédé selon l'une quelconque des revendications 1 à 8, un polyacrylonitrile cyclisé étant ajouté au matériau de matrice dans l'étape de procédé c), le polyacrylonitrile cyclisé étant obtenu par transformation de polyacrylonitrile en polyacrylonitrile cyclisé.

10. Procédé selon l'une quelconque des revendications 1 à 9, le polyacrylonitrile étant transformé avec du soufre en présence d'un catalyseur dans l'étape de procédé d).

11. Procédé pour la préparation d'un matériau actif pour une électrode, en particulier pour une cathode d'une batterie au lithium-soufre, comprenant un procédé selon l'une quelconque des revendications 1 à 10.

12. Procédé selon la revendication 11, le procédé comprenant en outre l'étape de procédé consistant à f) mélanger au moins un additif électriquement conducteur au matériau composite à base de polyacrylonitrile-soufre, en particulier choisi dans le groupe constitué par la suie, le graphite, des fibres de carbone, les nanotubes de carbone et les mélanges de ceux-ci.

13. Procédé selon l'une quelconque des revendications 11 ou 12, le procédé comprenant en outre l'étape de procédé consistant à
g) mélanger au moins un liant, en particulier le poly(fluorure de vinylidène) et/ou le polytétrafluoroéthylène, au matériau composite à base de polyacrylonitrile-soufre.

14. Procédé selon l'une quelconque des revendications 11 à 13,
- 60% en poids ou plus jusqu'à 90% en poids ou moins, en particulier 65% en poids ou plus jusqu'à 75% en poids ou moins, par exemple 70% en poids de matériau composite à base de polyacrylonitrile-soufre étant utilisés dans l'étape de procédé f) et/ou dans l'étape de procédé g) et/ou
- 0,1% en poids ou plus jusqu'à 30% en poids ou moins, par exemple 5% en poids ou plus jusqu'à 20% en poids ou moins d'additifs électriquement conducteurs étant mélangés dans l'étape de procédé f) et/ou
- 0,1% en poids ou plus jusqu'à 30% en poids ou moins, par exemple 5% en poids ou plus jusqu'à 20% en poids ou moins de liants étant mélangés dans l'étape de procédé g).

15. Utilisation d'un matériau composite à base de polyacrylonitrile-soufre, préparé selon l'une quelconque des revendications 1 à 10 comme matériau actif dans une électrode, en particulier dans une cathode d'une batterie à lithium-ion.
